# EUROPEAN PATENT APPLICATION

(11) **EP 2 236 428 A1**
(43) Date of publication of application: **06.10.2010**
(21) Application number: 09156885.7
(22) Date of filing: 31.03.2009
(51) Int. Cl.: B65D 1/24, B29C 45/17

(54) **Bottle crate with central carrier handle, central carrier handle and method of manufacturing a bottle crate with central carrier handle**

(71) Applicant: DW Plastics N.V., 3740 Bilzen (BE)
(72) Inventor: Isenborghs, Francis, B-1350, Jauche (BE)
(74) Representative: Ketelaars, Maarten F.J.M.

(57) **Abstract**

A bottle crate (1) is provided with a central carrier handle (2). The central carrier (2) handle has been manufactured separately from the rest of the bottle crate (1). The bottle crate has a handle receiving device (9) having an engagement means (42). The central carrier handle (2) has a handle end part (51) having a handle engagement means (53), preferably a protrusion (53). The central carrier handle (2) is connected to the bottle crate (1) by engaging the handle engagement means (53) provided on the handle end part (51) of the central carrier handle (2) with the engagement means (42) provided on the handle receiving device (9) of the bottle crate (1). The central carrier handle (2) is manufactured using liquid injection technology. The central carrier handle (2) can have a channel (61) substantially extending along the central carrier handle at its interior.

## Description

### Field

The invention relates to bottle crate with a central carrier handle. Another aspect of the invention relates to a central carrier handle for a bottle crate. More in particular, the present invention relates to a central carrier handle, which handle can be manufactured separately from the rest of the bottle crate, and which can subsequently be lockingly mounted on the bottle crate. Another aspect of the invention relates to a method of manufacturing a bottle crate with central carrier handle.

### Background

Bottle crates are known which have handles allowing the bottle crate to be lifted and carried. Bottle crates typically have handle openings in opposite side walls. Instead of, or in addition to the handles in the side walls a crate may have a central handle. Such a central handle is particularly suitable for lifting or carrying the crate with one hand only.

It has been found that it is advantageous to produce such a central handle separately from the crate and to later attach the handle to the crate. This has the advantage of allowing a simpler mould in the case of moulded crates, and to allow the separately produced handle to have a different colour or even to be produced of a different material from the remainder of the crate.

For example, Belgian Patent BE 1 013 062 discloses a plastic bottle crate having a central handle which is produced in a separate mould. In this known arrangement, the handle is substantially U-shaped, the end parts of the U being received in tubular members which are integral with a partitioning wall of the crate.

When handles are produced separately, the handle needs to be securely fixed onto the crate. In contrast to handles which are integral with the body of the crate, separately produced handles require a handle receiving device on the crate for attaching the handle to the crate. A suitable receiving device is e.g. described in European Patent Application EP1431202A1.

EP1431202A1 describes a container with a handle receiving device for receiving a container handle. The handle receiving device comprises a locking device comprising at least one tubular member for receiving an end part of the handle. The end part of the handle comprises a handle engagement means comprising a rim protruding from the handle end part. The locking device comprises internal flexible tongues, protruding inwardly from the wall of the tubular member, and designed to engage with the rim of the handle engagement means. The handle receiving device is described to be utilised in a plastics container such as a bottle crate.

It is known to manufacture carrier handles, e.g. the carrier handles like the ones described in BE 1 013 062 and EP1431202A1, with injection moulding using a mould corresponding to the external shape of the handle and comprising features such as a rim protruding from the handle end part. A warm plastics material, such as HDPE (high density polyethylene), is then injected into the mould. When subsequently cooled, the handle may be produced as a solid body of plastics material. It is also known to form the handle as a shaped, tubular device, allowing to use significantly less material than when a fully solid handle is manufactured. In that case, before allowing the warm material to cool off, a gas, typically nitrogen, is blown through the material in the mould. When the gas is blown into the mould, the gas pushes the material into contact with the mould for transferring the internal shape of the mould to the handle for forming the external shape of the handle. Also a hollow channel is formed in the handle, which channel extends from one end to the other end of the handle. The process may be referred to in the following as air moulding or gas moulding.

It is a drawback of the known handles produced using air moulding, that the manufacturing time associated with the air moulding is quite long. It is another disadvantage that the design freedom of the handles is limited due to the use of the air moulding process. The air mould process limits the flexibility in technical design freedom, such as dimensions, strength and shape. Furthermore, the amount of material required for meeting the technical design requirements, such as strength and weight, may run into limits with air moulding technology. As a result, bottle crates with a central carrier handle manufactured with injection moulding are subject to manufacturing limitations when using known manufacturing techniques.

### Summary

It is an object of the invention to overcome at least some of these and other problems of the prior art and to provide an improved bottle crate with a central carrier handle, an improved central carrier handle for a bottle crate, and an improved method of manufacturing a bottle crate with central carrier handle.

Hereto a first aspect of the invention provides a central carrier handle according to independent claim 1.

One key aspect of liquid injection technology (LIT) is that it uses a through-flow of a liquid through the mould cavity filled with a warm plastic material to transfer the internal shape of the mould as an external shape of the central carrier handle that is being formed, instead of using air. The use of a liquid, such as water, has the advantage that it provides a good transport of heat out of the mould cavity. Liquid injection technology thus allows for significantly shorter production time than air moulding. Moreover, the through-flow of the water can also create the hollow channel in the central carrier handle in a better controllable manner. It may allow to create thinner walls of the central carrier handle.

Further embodiments of the first aspect of the invention are defined in dependent claims. Advantages of one or more of the dependent claims may include that carrier handles with a larger cross section can be provided, allowing improved ergonomics, as a thicker handle is preferred when carrying a relatively heavy crate filled with bottles. An advantage of closed-off ends of the carrier handle is that it prevents that any dirt, other non-organic and organic material and bacteria can enter and gather in the carrier handle, which may not be hygienic. In contrast, known hollow handles have open ends, typically with the channel formed by air moulding extending from one end of the handle to the other end. Liquid injection technology may further allow the handle end parts to be at an angle relative to the legs of the carrier handle. This allows to not only manufacture U-shaped handles as described in e.g. BE 1 013 062, but also other shapes, including handles with a different distance between the two handle end parts than the size of the gripping part, e.g. with a significantly larger distance between the two handle end parts than the size of the gripping part. This advantageously provides additional technical design freedom.

A second aspect of the invention provides a bottle crate with a central carrier handle according to independent claim 9.

The advantages of such bottle crate will be clear from the advantages discussed in relation to the central carrier handle.

A third aspect of the invention provides a manufacturing method for a bottle crate with a central carrier handle according to independent claim 15.

Such manufacturing method can be advantageously used for providing an improved bottle crate with central carrier handle.

Various features described in this document may form the basis for one or more divisional applications. Furthermore, aspects may be combined to provide additional advantageous effects.

### Brief description of drawings

These and other aspects of the invention will be further elucidated and described in detail with reference to the drawings, in which corresponding reference symbols indicate corresponding parts:
Fig. 1 schematically shows a perspective view of a bottle crate according to an embodiment of the invention;
Fig. 2 schematically shows a central carrier handle according to an embodiment of the invention;
Fig. 3 schematically shows a central carrier handle according to another embodiment of the invention;
Fig. 4a - 4c show cross-sections through the central carrier handle of Fig. 3 at the positions indicated in Fig. 3;
Fig. 5a and 5b schematically show a cross-section of a bottle crate with a central carrier handle according to an embodiment of the invention;
Fig. 6 schematically shows, in a cross-sectional view, a handle receiving device used in an embodiment of the present invention.
Fig. 7 schematically shows, in a cross-sectional view, part of a handle according to an embodiment of the invention positioned in the handle receiving device of Fig. 6;
Fig. 8a and Fig. 8b schematically show, in cross-sectional views, part of a handle according to an embodiment of the invention, positioned in the handle receiving device of Fig. 6;
Fig. 9 schematically shows, in a cross-sectional view, part of a handle according to another embodiment of the invention positioned in the handle receiving device of Fig. 6;
Fig. 10 schematically shows aspects of a method of manufacturing a handle according to the invention;
Fig. 11a - Fig. 11c schematically show aspects of alternative embodiments of bottle crates according to the invention;
Fig. 12a and Fig. 12b schematically show alternative stacking arrangements of bottle crates according to the invention.

### Detailed description

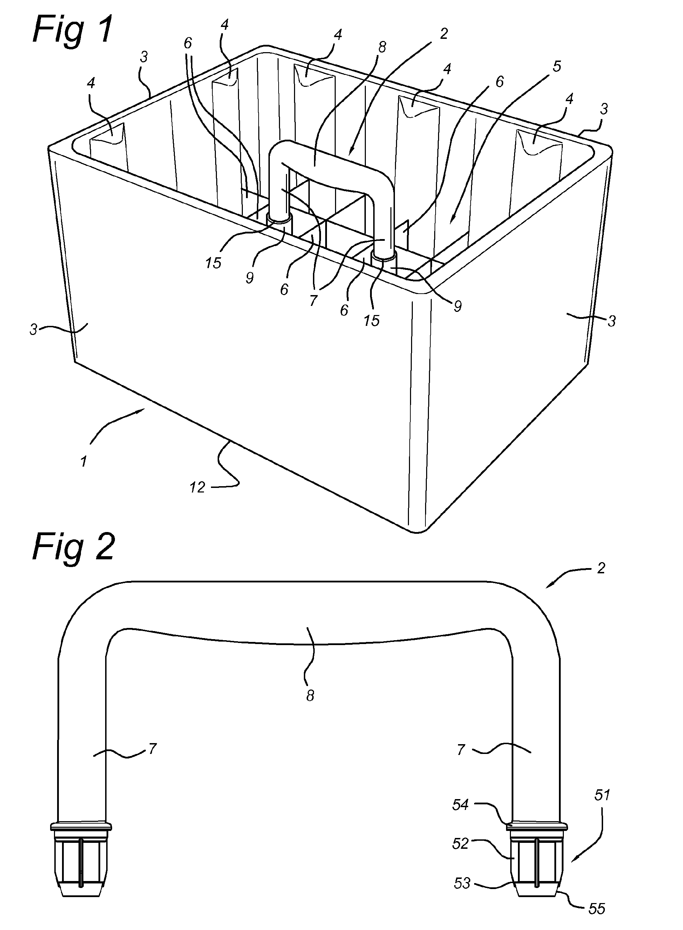

The bottle crate 1 shown merely by way of non-limiting example in Fig. 1 comprises a substantially rectangular base 12 and four upstanding side walls 3. The side walls shown in Fig. 1 are substantially closed, but the side walls 3 may alternatively have large openings through which the contents of the crate are visible. The side walls are provided with strengthening columns 4. An array 5 of bottle positions for receiving bottles is defined in the bottle crate 1 by partitions 6. The partitions 6 connect to the base 12 and to the side walls 3. The array 5 of bottle positions could additionally or alternatively be defined by other dividing elements such as pillars, also known as "cones" or "pinnacles", as e.g. described in EP1630103A1 (D W Plastics), which may be provided at the base 12.

The bottle crate 1 has a central carrier handle 2. The bottle crate 1 and the central carrier handle 2 according to the invention have been manufactured separately and thereafter connected together. The bottle crate 1 may e.g. be manufacturing using a first mould with a standard injection moulding process, whereas the central carrier handle 2 is produced using a second mould with liquid injection technology.

The central carrier handle 2 is shaped as a brace having two legs 7 connected with a grip part 8 in between the two legs. The grip part 8 is positioned towards the top side of the crate 1, and allows a person to carry the crate 1. The handle 2 shown in Fig. 1 is U-shaped, but the handle 2 may also have a different shape, as will be described below.

The ends of both legs 7 are connected to the bottle crate 1 via tubular handle receiving devices 9, each leg of the central carrier handle 7 being inserted partly into a respective tubular handle receiving device 9 and fixated in that position using a fixation mechanism, such as a click mechanism as described e.g. in EP1431202A1, or an alternative snap-lock mechanism, where the central carrier handle is snapped with the handle receiving devices for realizing a substantially permanent connection. The inner dimensions of the tubular handle receiving devices 9 correspond substantially to the outer dimensions of the respective leg, this making them fit well. Each leg 7 is provided with a flange 15, which limits the extent to which the leg 7 can be inserted into the respective tubular handle receiving device 9.

The carrier handle 2 has been manufactured separately from the crate 1. The handle receiving devices 9 may have been moulded in one piece with the rest of the crate 1. The crate is preferably made from a plastics material. The plastics material may e.g. be (high density polyethylene) . In the example shown, the two handle receiving devices 9 are spaced apart on the base 12 of the crate 1 and connected to the base 12. The two handle receiving devices 9 may also be connected to the crate 1 via one of the partitions 6. One partition may extend at least from one handle receiving device to the other handle receiving device.

In the example shown, the handle receiving devices 9 extend above the partitions 6. The handle receiving devices 9 may extend from the base 12 of the crate. The handle receiving devices 9 may alternatively be provided at the upper sides of the partitions 6 located centrally in the bottle crate 1, thus connecting to the base 12 via the partitions 6.

Fig. 2 schematically shows a central carrier handle 2 according to an embodiment of the invention, and corresponds to the handle 2 shown in Fig. 1.

The handle 2 is a U-shaped with two legs 7 connected by a grip part 8. The two legs are substantially parallel to each other. Handle end parts 51 are provided at the ends of the legs 7. Here, the handle end part 51 has a substantially circular cross-section which is externally provided with ribs 52, a ridge 53 and a flange 54 (corresponding to flange 9 in Fig. 1). In this example, the handle end part 51 has four ribs, but it will be appreciated that another number of ribs may be provided in alternative embodiments. Here, the handle end part 51 has a beveled part 55 at the insertion end of the handle. The beveled part 55 facilitates the insertion into a handle receiving device 9. The ribs 52, the ridge 53 and the flange 54 cooperate with the handle receiving device 9 in connecting the handle 2 to the receiving device 9, as will be described below.

It will be understood that these features are non-essential and that a handle end part having a substantially cross-shaped cross-section can also be used, with or without a beveled insertion end. It is, however, necessary for the handle end part 51 to have a protrusion equivalent in function to the ridge 53, which protrusion can be engaged by flexible tongues or equivalent engagement means in the handle receiving device 9.

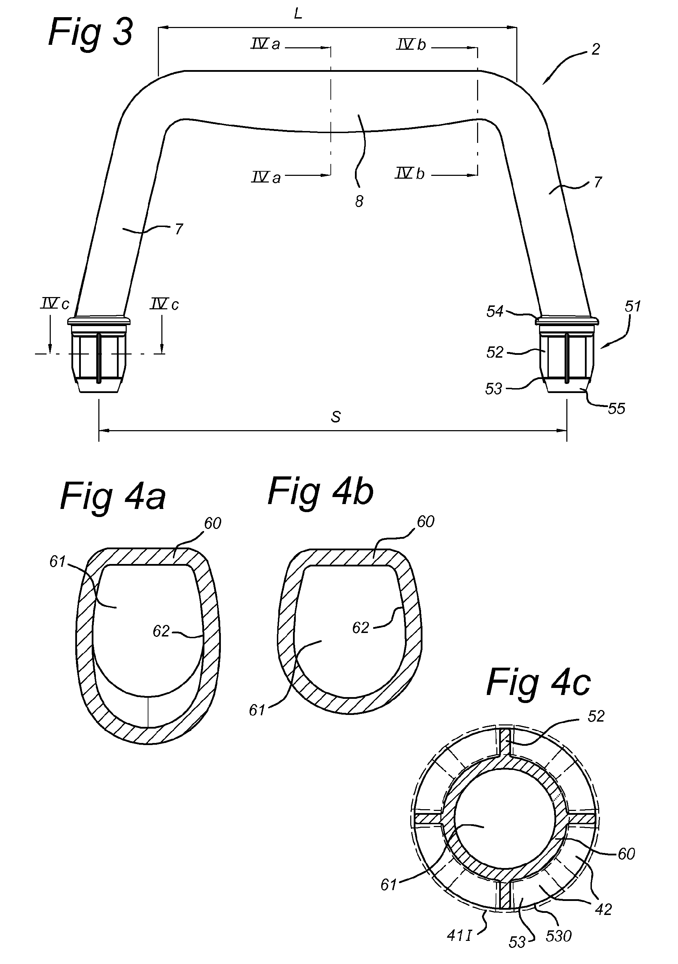

Fig. 3 schematically shows a central carrier handle according to another embodiment of the invention.

The central carrier handle of Fig. 3 deviates from that of Fig. 2 and from prior art carrier handles in that the two legs 7 are not parallel, but are positioned at an angle relative to the grip part 8. In the example shown, distance S between the handle end parts 51 is larger than length L of the grip part 8. The corresponding bottle crate may thus be provided with a larger distance between the two handle receiving devices 9, compared to using a U-shaped handle according to Fig. 2 with a similar length L of the grip part 8. The handle end parts 51 are oriented substantially perpendicular to the grip part 8, and thus at an angle relative to the respective legs 7. The handle receiving devices 9 of the corresponding bottle crate are thus still oriented perpendicular to the base 12, and in the same direction as the partitions 6 and, during use, the bottles in the crate. Applicant believes that the angles between the handle end portions 51 and the legs 7 are enabled by the use of the liquid injection technology process. In an alternative embodiment, distance S between the handle end parts 51 is smaller than length L of the grip part 8. Using a distance S between the handle end parts 51 that is different from the length L of the grip part 8 may be advantageous e.g. because it allows to optimize the length L of the grip part 8 to match optimal carrier comfort for a user carrying the bottle crate 1 with the carrier handle 2, while optimizing the positions of the handle receiving devices in the bottle crate 1 based on e.g. manufacturing requirements, bottle positions, or other parameters.

The central carrier handle as shown in Fig. 3 deviates further from that of Fig. 2 in that the cross section of the grip part 8 is not circular, but shaped according to a more ergonomic-friendly manner. It will be understood that these shapes may also be employed in a U-shaped central carrier handle.

Fig. 4a shows a cross section through the central carrier handle of Fig. 3 along line IVa - IVa in a plane perpendicular to the paper. Line IVa - IVa is positioned at the middle of the grip part 8. Fig. 4a shows that the central carrier handle is a hollow structure, where an interior space 61 is enclosed by a handle wall 60. The interior space 61 corresponds to the flow channel of the liquid used in the liquid injection technology process while manufacturing the handle 2. The inner side 62 of the wall 60 has a smooth surface, which is also attributed to the liquid injection technology process (whereas it is often irregular when air moulding is used). The thickness of wall 60 can be relatively thin, which is one of the advantages of the liquid injection technology process, as it allows a low weight for the carrier handle, and corresponds to only a small amount of required material. The thickness of the wall 60 may e.g. be less than 3 mm, such as substantially 2,5 mm. The amount of required material for a specific strengths may thus be reduced compared to prior art techniques, which require thicker walls 60. The interior 61 as well as the walls 60 have an approximate oval shape along IVa - IVa.

Fig. 4b shows a cross section through the central carrier handle of Fig. 3 along line IVb - IVb in a plane perpendicular to the paper. Line IVb - IVb is positioned at a position along the grip close to the leg 7. The cross-section has a different shape than in Fig. 4a: interior 61 as well as walls 60 have a less-oval shape along IVb - IVb.

The carrier handle 2 is thus shaped with a relatively thick middle section, allowing the bottle crate 1 to be carried comfortable, the handle 2 being ergonomically well-shaped.

The legs 7 of the carrier handle 2 may have again a different cross-section. The cross-section of the legs 7 may e.g. change gradually from the end near the grid part 8 to the handle end portion 51, e.g. become smaller and/or more cylindrical towards the handle end portion 51. The cross-section of the legs 7 may e.g. be smaller than smallest cross-section of the grip part 8, and/or have a substantially circular cross-section, e.g. with a substantially circular interior 61, thus forming a substantially cylindrical tubular shape.

Fig. 4c shows a cross section through the central carrier handle of Fig. 3 along line IVc - IVc in a plane perpendicular to the paper. Line IVc - IVc is positioned at the handle end part 51. At this position, interior 61 as well as walls 60 have a substantially circular shape. The walls 60 are externally provided with ribs 52. In this exemplary embodiment, four ribs 52 are provided, but other numbers, such as two, three, six or eight, are also possible. Line 530 indicates the outer circumference of the ridge 53 (refer to Fig. 2 and Fig. 3, and Fig. 8 below). The dashed lines in Fig. 4c represent the flexible tongues 42 in the handle receiving device 9, and inner surface 41I of the tubular handle receiving device 9, wherein the handle end part 51 is received. Each of the ribs 52 is designed for being received between two neighbouring flexible tongues 42 provided in the handle receiving device 9, thus aligning the handle 2 with respect to the handle receiving device 9. It will be understood that in an alternative embodiment, the function of alignment may be provided with alternative means, other than the ribs 52 received between flexible tongues 42, which alternative means may again be associated with receiving alternative alignment means provided in the handle end part 51 in a reference slot provided in the handle receiving device 9.

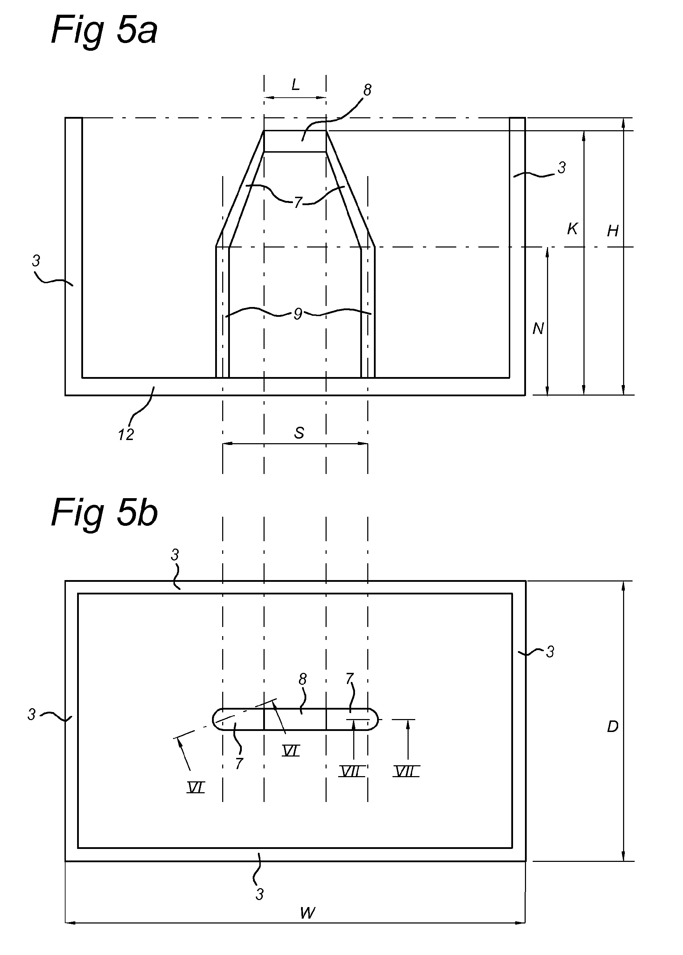

Fig. 5a and 5b schematically show a much-simplified cross-section though of a bottle crate with a central carrier handle according to an embodiment of the invention.

Fig. 5a and 5b indicate the dimensions of the bottle crate 1: the crate has an external width W, which width is preferably between 20 and 80 cm, such as 40 cm, an external depth D, which is smaller than the width W, with the depth D being preferably between 15 and 60 cm, such as 30 cm, and an external height H, which height is preferably between 12 and 80 cm, such as approximately 25 cm, e.g. 24.8 cm. A bottle crate of W = 40 cm, D = 30 cm and H = 25 cm may e.g. comprise 24 bottle positions for receiving 24 bottles, each bottle having an outer diameter of 6 cm. The bottle positions may be arranged as an array of 4 x 6 bottle positions arranged to receive individual bottles. The bottle positions may be arranged to allow to receive the bottles in sets of e.g. 6, contained in a six-pack.

The handle receiving devices 9 are spaced at a spacing distance S, which is preferably larger than 25% of the external width W, preferably larger than 40% of the external width, even more preferably larger than 50% of the external width, such as at spacing distance 24 cm when the external width W is 40 cm.

The handle receiving devices 9 have a device height N, which is preferably larger than 5 cm and preferably between 25% and 60% of the external height H, such as approximately 10-12 cm when the external height is approximately 25 cm.

The central carrier handle 2, positioned in the handle receiving devices 9, extends upto a grip height K from the base 12, which grip height K corresponds preferably to between 80% and 100% of the external height. The grip height K may e.g. correspond substantially to the external height H, such that the top side of the grip part 8 and the top of the side walls 3 are at substantially the same height, such that the grip may provide support to a crate placed on top of the crate 1 when crates are stacked during storage and transport. Especially when crates are stacked in an interlocked manner, i.e. crates directly on top of each other being displaced relative to one another (e.g. shifted or rotated), this may be advantageous.

The grip part 8 of the central carrier handle 2 has a grip length L, which is preferably not larger than the spacing distance S of the handle receiving devices, and preferably between 25% and 90% of the spacing distance S, even more preferably between 60% and 85%. E.g., when the spacing distance S is 24 cm and the external width is 40 cm, the grip length may be approximately 18 cm.

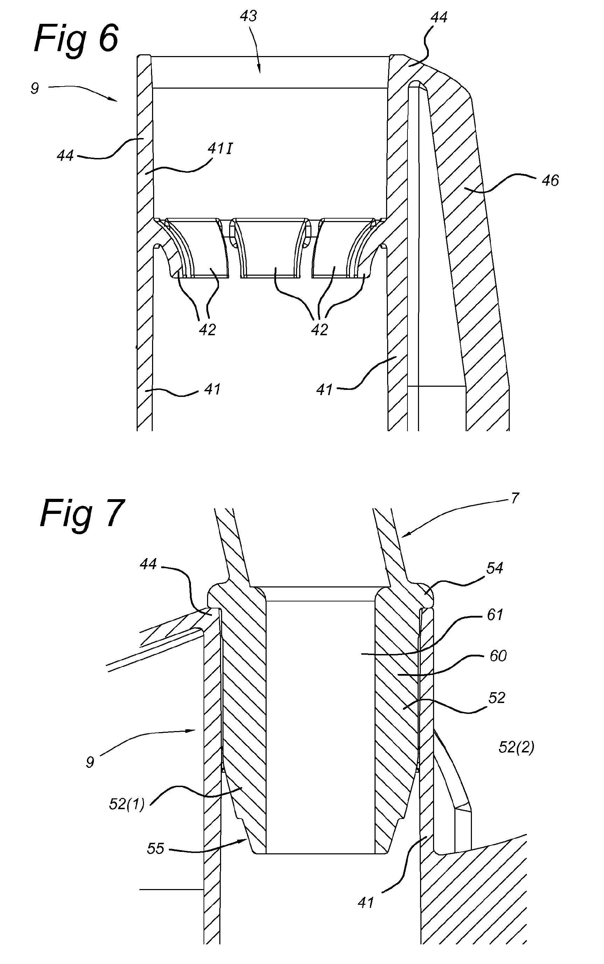

Fig. 6 schematically shows, in a cross-sectional view, a handle receiving device 9 used in an embodiment of the present invention, along line VI-VI in Fig, 5b. Note that line VI-VI is at an angle relative to the long axis of the bottle crate 1, as shown in Fig. 5b. The handle receiving device is similar to the one described in EP1431202A1.

Tubular members 41 of the handle receiving device 9 each have, at inner surface 41I, a set of internal tongues or lips 42 which protrude inward. These tongues 42, which in the preferred embodiment are integral with the walls of the tubular member 41, are designed to engage the ridge 53 of the handle part 51 shown in Fig. 3. As shown in Fig. 6, the tongues 42 slope away from insertion opening 43 and are positioned at an angle of approximately 30° relative to the walls of the tubular member 41 so as to facilitate the insertion of the handle. As shown in Fig. 3 and Fig. 7 (below), the handle end part 51 has a ridge 53 and a flange 54. When the handle end part 51 is inserted into the tubular member 41 of Fig. 6, the ridge 53 pushes the tongues 42 apart. Once the ridge 53 has passed the tongues 42, the tongues flex back and prevent the ridge 53 from moving back, thus locking the handle end part 51 in the tubular member 41. The flange 54, which protrudes substantially radially from the handle end part 51, then rests on the top edge 44 of the tubular member 41. The distance between the tongues 42 and the top edge 44 is designed to match the distance between the ridge 53 and the flange 54. It is noted that in the embodiment shown the substantially radially extending ridge 53 does not extend beyond the handle end portion, in contrast to the flange 54. It is further noted that the flange 54 is not essential and may be omitted in certain embodiments The connection between the handle receiving device 9 and the crate 1, e.g. the base 12, or partitions 6, may be strengthened using a buttress-line support 46, connecting e.g. the top edge 44 of the handle receiving device 7 to the base 12 as shown in Fig. 6.

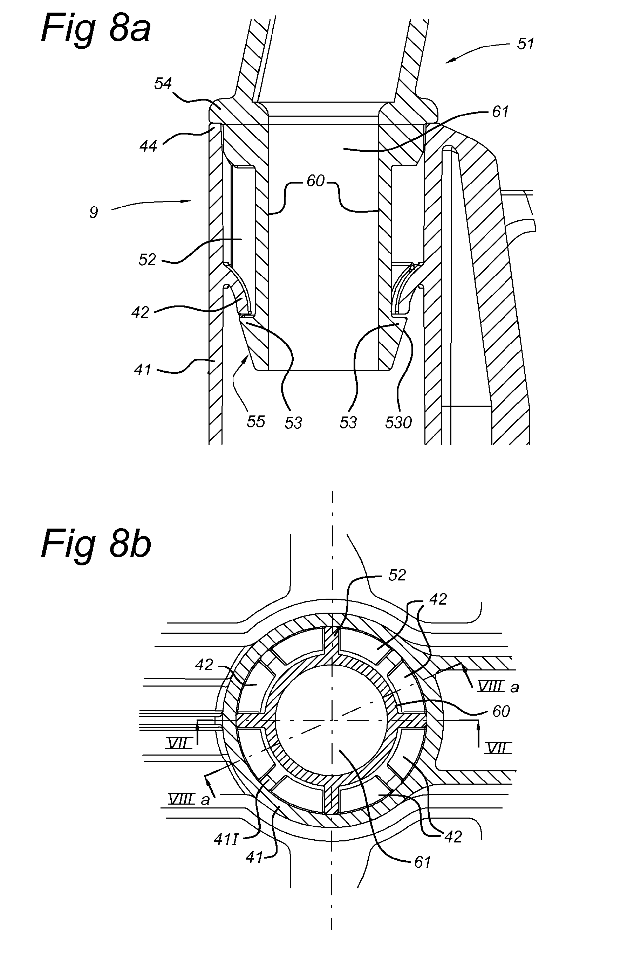

Fig. 7, Fig. 8a and Fig. 8b schematically show, in cross-sectional views, part of a handle according to an embodiment of the invention positioned in the handle receiving device 9 of Fig. 6. Fig. 7 corresponds to a cross section along line VII-VII in Fig. 5b, i.e. in the length direction of the crate 1. Fig. 8a corresponds to a cross section along line VI-VI in Fig. 5b and corresponds to the same cross-section as shown in Fig. 6, but now with the handle end part 51 being in position in the handle receiving device 9. Fig. 8b shows the handle end part 51 being in position in the handle receiving device 9 in a cross-section oriented as Fig. 4c. Line VII-VII and line VIIIb-VIIIb indicate the directions of the cross-sections shown in Fig. 7 and Fig. 8b respectively: line VII-VII extends through ribs 52(1), 52(2) positioned on opposite sides of the handle end part 51; line VIIIb-VIIIb extends through flexible tongues 42(1), 42(2) at opposite sides of the handle receiving device 9.

Fig. 7 shows the handle end part 51, positioned in the handle receiving device 9. At this position, interior 61 as well as walls 60 of the handle end part 51 have a substantially circular shape. The flange 54 is shown to rest on the top edge 44 of the tubular member 41. The ribs 52 are approximately in contact with the inner surface of the tubular member 41, thus defining the position of the handle end part 51 relative to the handle receiving device 9.

Fig. 8a shows the flexible tongues 42 engaging with the ridge 53, thus fixing the handle end part 51 securely in position in the handle receiving device 9. Fig 8b shows that the tongues 42 are arranged in such a way that the ribs 52 can pass between openings between the tongues. In the preferred embodiment, a circular arrangement of eight tongues is provided, but other numbers, such as four or sixteen, are also possible. Fig. 8b shows that each of the four ribs 52 is received between two neighbouring flexible tongues 42, thus aligning the handle 2 with respect to the handle receiving device 9. Hence, the flexible tongues have a double function: they receive the ribs 52 for alignment, and they engage firmly with the ridge 53 for connecting the handle 2 to the crate 1 by a click mechanism of the ridge 53 with the tongues 42. It will be understood that in an alternative embodiment, the function of alignment may be provided with alternative means, other than the ribs 52 received between flexible tongues 42, which alternative means may again be associated with receiving alternative alignment means provided in the handle end part 51 in a reference slot provided in the handle receiving device 9.

The insertion end of the handle part 51 has a beveled part 55 to facilitate the insertion into a tubular member 41. It will be understood that these features are non-essential and that a handle end part having a substantially circular cross-section can also be used, with or without a beveled insertion end. It is, however, necessary for the handle end part 51 to have a protrusion equivalent in function to the ridge 53, which protrusion can be engaged by the flexible tongues 42 or equivalent engagement means.

Although the flexible tongues 42 are shown in Fig. 6 and Fig. 8a to be located near the insertion opening 43, they could also be located further away from the insertion end, for example near the base 2 of the container. The location of the ridge 53 (Fig. 8a) or its equivalent would of course be adjusted accordingly. Instead of a single set of tongues, grouped in a circular arrangement as shown in Fig. 2, two or more set of tongues could be provided with corresponding ridges 53. The substantially circular arrangement of the tongues 42 could be replaced by another arrangement, corresponding with the particular shape and cross-section of the handle end part 51. Similarly, the tubular members 41 need not have a substantially circular cross-section and could, for example, also have a substantially oval, hexagonal, square or triangular cross-section.

It is an advantage of the above described mechanism of click-snapping the handle 2 with its handle end part 51 in the handle receiving device 9, that it provides a robust, reliable and substantially permanent connection of the handle 2 to the crate 1, after the handle 2 has been put in position. The click-snapping mechanism provides a one-way snap, which prevents accidental release of the connection. The handle receiving device 9 and/or the handle end part 51, in particular the tongues 42 and/or ridge 53, may be arranged such that any successful, forceful, attempt to release the connection will destroy part of the handle receiving device 9 and/or the handle end part 51, in particular the tongues 42 and/or the ridge 53, preventing to connect the handle 2 again to the crate 1, which would have the risk to be less reliable. When connected, the handle 2 is thus always reliably connected to the crate 1.

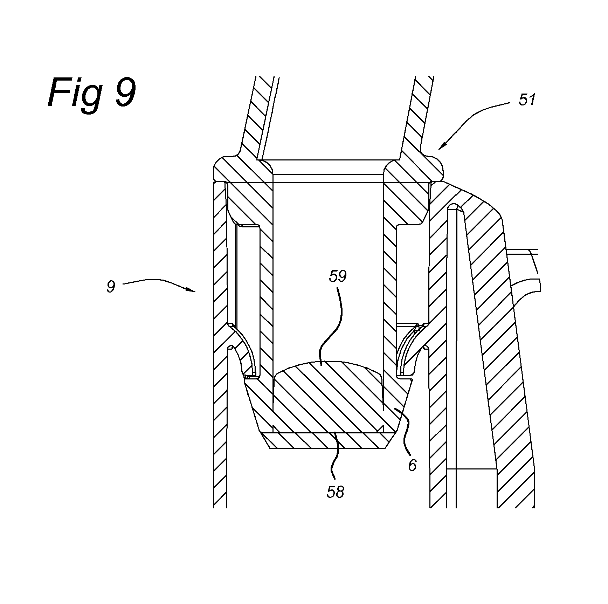

Fig. 9 schematically shows, in a cross-sectional view, part of a handle according to another embodiment of the invention positioned in the handle receiving device of Fig. 6.

The embodiment shown in Fig. 9 differs from the embodiment shown in Fig. 8a, in that the end of the handle end part 51 shown in Fig. 9 is closed-off with an end plug 58, whereas the embodiment shown in Fig. 8a shows an open end of the handle end part 51.

An advantage of closed-off ends of the carrier handle is that it prevents that any dirt, other non-organic and/or organic material and e.g. bacteria enters and gathers in the carrier handle 2, which may not be hygienic. In contrast, known hollow handles have open ends, typically with the channel formed by air moulding extending from one end of the handle to the other end.

The end plug 58 is applied to the carrier handle 2 during a last phase of the liquid injection technology, as will be explained in detail below, and can thus be applied within the same process as forming the carrier handle 2. This allows a time- and cost-efficient manufacturing of such a closed-off carrier handle.

It may be noted from Fig. 9 that interior surface 59 of the end plug 58 does not need to have a regularly shaped surface. As the function of the end plug 58 is to close-off the carrier handle 2, this is well acceptable and no additional process steps are required to provide e.g. a smooth interior surface 59. Note that the end plug 58 and most of the handle end part 51 are, after the carrier handle 2 has been connected to the bottle crate 1, positioned inside the handle receiving device 9, so that a possible effect on the visual appearance caused by the end plug 58 on the handle end part 51 in the immediate vicinity of the end plug 59 is also acceptable, as it will not be visible by a user, such as a buyer of a bottle crate filled with bottles.

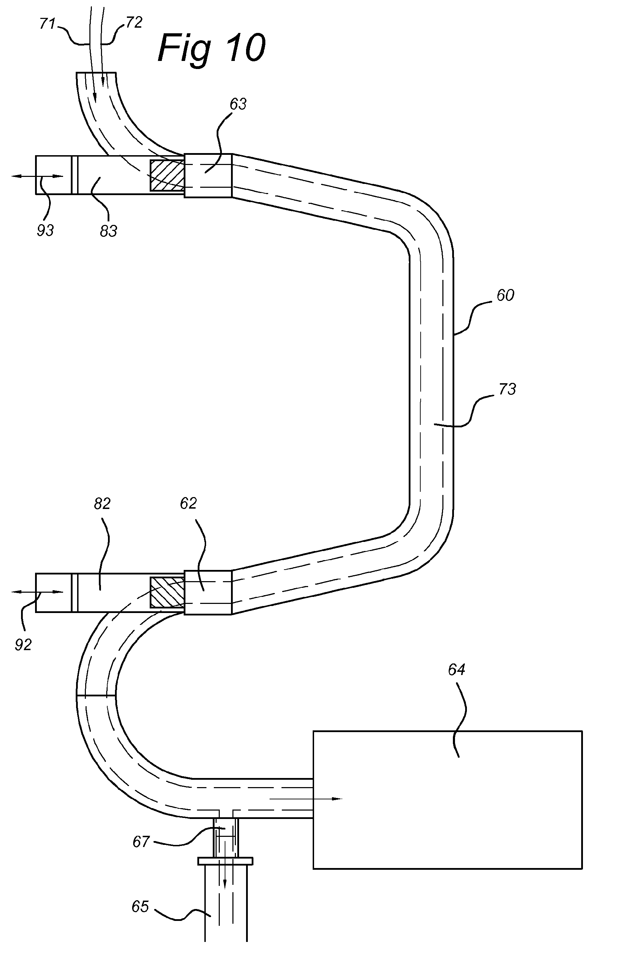

Fig. 10 schematically shows aspects of a method of manufacturing a handle according to the invention and of manufacturing equipments used with the method. The method may be further referred to as liquid injection technology (LIT).

The method uses a moulding cavity 60 provided with an internal structure corresponding to an external structure of the carrier handle to be manufactured. The moulding cavity 60 has an injection hole (not shown) for filling the moulding cavity with a warm plastics material. The injection hole may be a relatively small hole. The moulding cavity further has an inlet 63 for injecting a liquid 71 and compressed air 72 into the moulding cavity, as will be described below. The inlet 63 also be referred to as an injection opening. The moulding cavity further has an outlet 62, which may also be referred to as a throughflow opening.

Initially, the outlet 62 is closed and the moulding cavity 60 is filled with a warm plastics material, such as HDPE (high density polyethylene), through the injection hole (not shown). Inlet 63 is open while filling the moulding cavity 60 through the injection hole (not shown).

Next, the outlet 62 is opened and liquid 71, preferably water, is injected through the inlet 63. While injecting the liquid continues, the liquid 71 is finding its way through the warm plastics material and thus forms a channel 73 in the warm plastics material. The liquid 71 may substantially center its flow in the moulding cavity 60, hence in the plastics material as the warm plastics material is warmest in the center of the cavity. The pressure applied by the liquid 71 into the warm plastics causes the plastics to completely fill the moulding cavity such that the internal structure of the cavity is transferred onto the plastics, thus providing the carrier handle 2 with its required shape. While the liquid 71 flows through the warm plastics material, the liquid 71 also aids in transporting the heat away from the warm plastics material, allowing it to solidify. The excess plastics is pushed out of the cavity 60 by the liquid 71 through the outlet 62 and collected in a overflow reservoir 64. The excess plastics collected in the reservoir 64 can be re-used at a later moment in time in manufacturing e.g. more carrier handles. When the liquid 71 leaves the outlet 62, a valve 67 provided at an exit in between the outlet 62 and the reservoir 64, is opened and the liquid 71 is transported away via a liquid transport line 65. Next, the injection of liquid 71 is stopped, and, subsequently, compressed air 72 is injected through the inlet 63 into the moulding cavity 60, more particular into the channel 73 in the (now partly, or largely, cooled down) plastics material. The compressed air 72 blows residual liquid 71 out of the channel and dries the channel 73. The compressed air 72 may be hot compressed air for quick drying of the channel 73. Alternative to using hot compressed air, cold compressed air may be used for accelerating the cooling down of the plastics material. Alternatively, first cold compressed air may be used for cooling down the plastics material, and subsequently hot compressed air may be for drying the channel 73.

The moulding cavity 60 can then be opened for releasing the carrier handle 2, and providing a carrier handle with open ends (e.g. as shown in Fig. 8a).

Alternatively, the process can continue with closing off the ends of the carrier handle at the inlet 63 and the outlet 62. For this purpose, some warm plastics material has been stored in further cavities 83 and 82, opposite the inlet 63 and outlet 62 respectively, in line with the cavity ends. The further cavities 83 and 82 are open at the side facing the cavity 60, whereas they are closed with respective cylinder valves 93 and 92 at their opposite ends. For closing off the ends, the cylinder valves 93 and 92 press the warm plastics material stored in the further cavities 83 and 82 into the handle end parts 51 which are still in the cavity 60 close to the inlet 63 and outlet 62 respectively. The warm plastics material that was stored in the further cavities 83 and 82 is thus pushed into the channel in the handle end parts 51 and closes off the channel inside the handle. The moulding cavity 60 can then be opened for releasing the carrier handle 2, and providing a carrier handle with closed-off ends (e.g. as shown in Fig. 9).

It will be appreciated that the inlet for the liquid 71 and the inlet for the compressed hot air 72 may be a single inlet to the molding cavity 60, or may be two separate inlets close to one another. In an alternative embodiment, the inlet for the compressed hot or cold air is provided at the outlet side 62 of the liquid.

The liquid 71 flowing through the warm plastics material is able to transport a significant amount of heat away from the warm plastics material, thus cooling off the material much more quickly compared to an air flow into the material: not only is air less capable of transferring away the heat, the air will also stay in the cavity when using air moulding, instead of flowing through it (in contrast to the liquid in LIT). This advantageously results in a significant reduction of the time required for manufacturing a carrier handle. This is especially advantageous when manufacturing relatively large carrier handles, as larger handles, i.e. more material, would require more and more manufacturing time when using air molding, while the manufacturing time remains significantly less when using LIT. It also allows e.g. to manufacture a carrier handle which has widely opened legs, i.e. where S is much larger than L (Fig. 5a and Fig. 5b).

The use of the reservoir 64, and the characteristic of the liquid injection technology that warm plastics material can be pushed out of the cavity, allows to manufacture a carrier handle 2 which uses a significant amount less plastics than was initially provided in the moulding cavity 60. As an advantageous consequence, use of the liquid injection technology allows to manufacture a carrier handle 2 with relatively wide channels and relatively thin walls.

The combination of reduced manufacturing time and the possibility to reduce relatively thin walls, allows also to manufacture light-weight carrier handles, also of large dimensions.

The liquid is preferably water. Alternatively liquids may also be applied, when suitably selected in regards of e.g. reactivity with the plastics material.

It will be appreciated that a method for manufacturing a crate with a carrier handle according to the invention comprises a separate manufacturing of a) the carrier handle 2 and b) an integral body forming the rest of the crate 1, and, subsequently, inserting the carrier handle 2 with its handle end parts 51 in corresponding handle receiving devices 9 which are provided as part of the separately manufactured integral body, allowing the tongues 42, which in the preferred embodiment are integral with the walls of the tubular member 41, to engage the ridge 53 of the handle part 51.

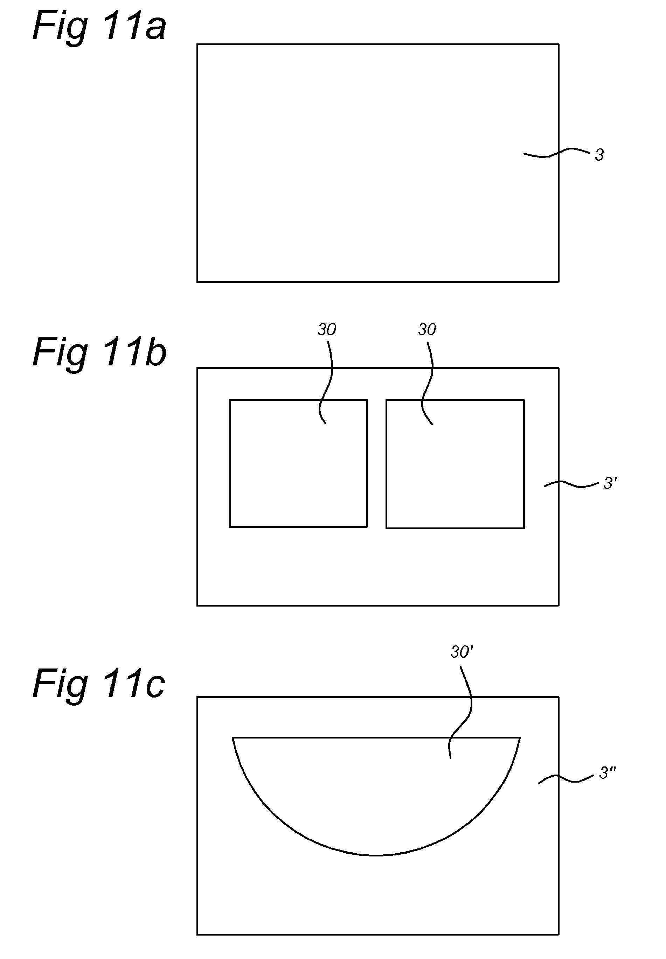

Fig. 11a - Fig. 11c schematically shows aspects of alternative embodiments of bottle crates according to the invention.

Fig. 11a shows a closed side wall 3, similar to the one shown in Fig. 1. When all four side walls of the crate are such closed walls, a rigidly very robust bottle crate is provided and a large area is available for information associated with bottles in the bottle crate, such as brand name, type of the drink etc.

Fig. 11b shows an alternative side wall 3', which may be used in the bottle crate as an alternative to side wall 3, for providing an open-walled crate. The alternative side wall 3'comprises a plurality of openings 30, in this example 2, in the side wall 3'. It advantageously allows to see what is inside the crate, e.g. what type of bottles and/or whether the crate is filled with bottles or the crate is empty and/or whether the bottles in the crate are full or empty. As the structural integrity of a crate with such open walls could be somewhat compromised, a robust and reliable connection between the handle receiving device 9 and the carrier handle 2, as provided with a crate with a handle according to the invention, is especially beneficial for such open-walled crates.

Fig. 11c shows an alternative side wall 3", which may be used in the bottle crate as an alternative to side wall 3 and 3', for providing an alternative open-walled, branded crate. The alternative side wall 3" comprises a specifically-shaped opening 30' in the side wall 3', which may e.g. be a shaped associated with a brand of a manufacturer of the drinks in the bottles for which the bottle crate is designed. In particular for such branded-crate, a specifically-colored and/or specifically-shaped carrier handle 2 may be provided, with e.g. a color of the carrier handle 2 being different for different types of products of the same brand, or for distinguishing the products against other brands.

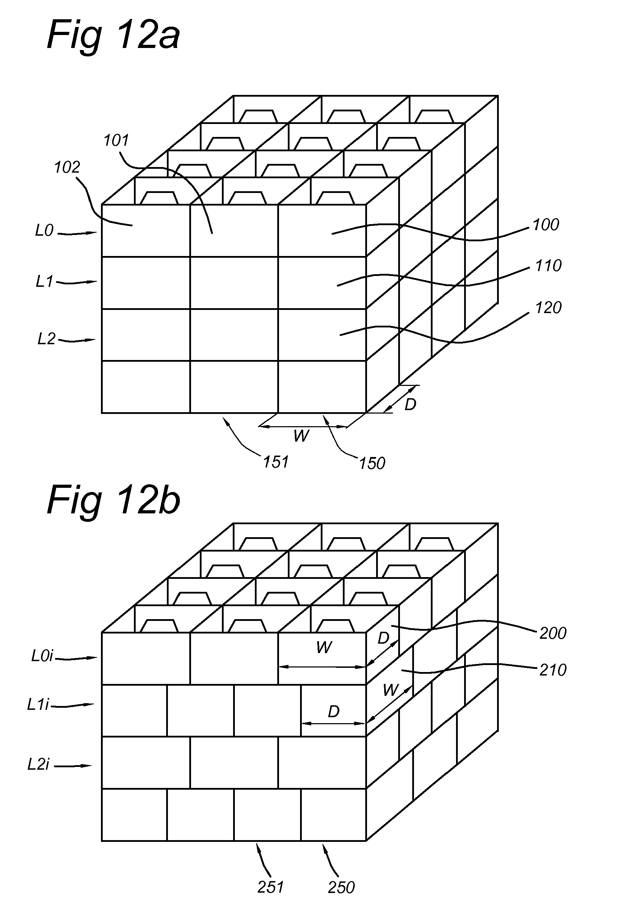

Fig. 12a and Fig. 12b schematically shows alternative stacking arrangements of bottle crates according to the invention.

Fig. 12a shows a so-called column stacking of bottle crates. A first plurality of crates 100, 110, 120 is stacked on top of each other forming a first column 150 of crates. Likewise are further columns 151,... of crates formed by stacking further pluralities of crates on top of each other in further columns. All columns are placed side-by-side for transport. The column stacking thus provides a stack of layers L0, L1, L2, ... of, in this examples, twelve bottle crates per layer, each crate having a dimension of W = 40 cm, D = 30 cm and H = 24 cm, and all crates aligned in the same direction.

Fig. 12b shows an interlocked stacking. In an interlocked stacking, the crates directly on top of each other, e.g. crate 200 and 210, are displaced relative to one another, e.g. of the crates 200, ... in even-numbered layers L0i, L2i, ... of the column stacking are all aligned in one direction, whereas the crates 210, ... in odd-numbered layers L1i, ... are rotated relative to the crates below them as shown for crates 200 and 210 in column 250 in Fig. 12b. As shown in Fig. 12b, the interlocked stacking results in neighbouring columns 250, 251 being interlocked, also referred to as interleaved, with each other. The interlocking has the advantage that an interlocked stacking is generally more stable than a column stacking.

The stability of the stacking, especially of interlocked stacking, can advantageously further be improved when crates with carrier handles according to embodiments of the invention, wherein the top of the carrier handle extends in height to the top of the crate, i.e. with K corresponding to H (Fig. 5a and Fig. 5b). The carrier handle 2 then supports the crate stacked on top of the crate 1 to which the carrier handle 2 is connected, thus carrying part of the weight of crates stacked on top of the crate 2, and relieving the side walls 3 from carrying all this weight.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Throughout this document, the term "and/or" includes any and all combinations of one or more of the associated listed items.

## Claims

1. A central carrier handle (2) for a bottle crate (1), the central carrier (2) handle having been manufactured separately from the bottle crate (1), the central carrier handle (2) comprising a handle end part (51) comprising a handle engagement means (53), preferably a protrusion, which handle engagement means (53) is arranged to engage with an engagement means (42) of a handle receiving device (9) provided in the bottle crate (1),
**characterized in that**
the central carrier handle (2) is manufactured using liquid injection technology.

2. Central carrier handle according to claim 1, wherein the central carrier handle (2) comprises a channel (61) substantially extending along the central carrier handle at its interior.

3. Central carrier handle according to claim 2, wherein the channel (61) is closed-off with end plugs (58).

4. Central carrier handle according to any one of the preceding claims, wherein the central carrier handle comprises two legs (7) comprising respective handle end parts (51), the two legs being connected with a grip part (8) and the handle end parts (51) being provided at an angle relative to the respective legs (7).

5. Central carrier handle according to claim 4, wherein the handle end parts (51) are spaced with a spacing (S) and the grip part (8) has a grip length (L), the grip length (L) being smaller than 90% of the spacing.

6. Central carrier handle according to any one of the preceding claims, wherein at least part of the central carrier handle (2) has a cross-section of at least 3,5 cm², preferably in the range of 5 - 8 cm².

7. Central carrier handle according to any one of the preceding claims, wherein the protrusion (53) is a radially extending ridge (53).

8. Central carrier handle according to any one of the preceding claims, wherein the handle end part (51) further comprises ribs (52) extending outwardly, and the ribs (52) are arranged to cooperate with the engagement means (42) for aligning the handle end part (51) in the handle receiving device (9).

9. A bottle crate (1) provided with a central carrier handle (2),
- the central carrier (2) handle having been manufactured separately from the rest of the bottle crate (1),
- the bottle crate comprising a handle receiving device (9) comprising an engagement means (42),
- the central carrier handle (2) comprising a handle end part (51) comprising a handle engagement means, preferably a protrusion (53),
- the central carrier handle (2) being connected to the bottle crate (1) by engaging the handle engagement means (53) provided on the central carrier handle (2) with the engagement means (42) provided at the bottle crate (1),
- the central carrier handle being a central carrier handle according to any one of the preceding claims.

10. Bottle crate according to claim 9, wherein the handle receiving device (9) comprises a tubular member (41) and the engagements means (42) comprises a set of tongues (42) provided in the tubular member (41) and protruding inwards, the tongues being preferably flexible tongues allowed to flex outwards when receiving the handle end part (51).

11. Bottle crate according to claim 10, wherein the tongues (42) are integral with the walls of the tubular member (41), the protrusion (53) is a radially extending ridge (53), and the tongues (42) engage the ridge (53) of the handle end part (51).

12. Bottle crate according to claim 10 or 11, wherein the handle end part (51) further comprises ribs (52) extending outwardly, and the ribs (52) are positioned in between adjacent tongues (42).

13. Bottle crate according to any one of the claims 9 - 12, wherein the central carrier handle (2) extends to a top surface of the bottle crate (1).

14. Bottle crate according to any one of the claims 9 - 13, wherein the central carrier handle (2) comprises two legs (7) comprising respective handle end parts (51) spaced with a spacing (S) and connected with a grip part (8) of a grip length (L), the grip length (L) being at least 10 cm, the spacing (S) between the two handle end parts (51) being at least 25%, preferably at least 33%, of the external width (W) of the bottle crate (1).

15. A manufacturing method for a bottle crate with a central carrier handle, the method comprising:
- manufacturing a bottle crate (1) according to any one of the claims 9 - 14, provided with a handle receiving device (9) comprising an engagement means (42), the manufacturing preferably using injection moulding,
- separately manufacturing a central carrier handle (2) according to any one of claims 1-8, provided with a handle end part (51) comprising a handle engagement means (53), preferably a protrusion (53), the separately manufacturing using liquid injection technology, and
- connecting the central carrier handle (2) being connected to the bottle crate (1) by engaging the handle engagement means (53) provided on the handle end part (51) of the central carrier handle (2) with the engagement means (42) provided on the handle receiving device (9) of the bottle crate (1).
